Europäisches Patentamt

European Patent Office

Office européen des brevets

(19)

(11) Publication number: **0 232 963**
**A1**

(12) **EUROPEAN PATENT APPLICATION**

(21) Application number: **87300158.0**

(22) Date of filing: **08.01.87**

(51) Int. Cl.⁴: **F16J 15/447** , F16C 33/80

(30) Priority: **08.01.86 ZA 860141**

(43) Date of publication of application:
**19.08.87 Bulletin 87/34**

(84) Designated Contracting States:
**DE ES FR GB IT NL SE**

(71) Applicant: **S.K.F. SOUTH AFRICA
(PROPRIETARY) LIMITED
Jones Road
Boksburg Transvaal(ZA)**

(72) Inventor: **Lipke, Walter Karl
29 Hazel Road Benoni Agricultural Holdings
Benoni Transvaal(ZA)**

(74) Representative: **Blanco White, Henry Nicholas
et al
ABEL & IMRAY Northumberland House
303-306 High Holborn
London WC1V 7LH(GB)**

(54) **Rotary seals.**

(57) A labyrinth seal between a flinger plate 11 and a housing 21 is formed between truncated conical surfaces and their truncated ends of flanges 23 and 25 and 26. All parts of the labyrinth thus have a radial component.

EP 0 232 963 A1

"ROTARY SEALS"

## BACKGROUND TO THE INVENTION

This invention relates to rotary seals of the kind used between relatively rotating parts.

Labyrinth seals for the purpose in question are known. In such known seals the labyrinths are formed by passages which are co-axial with a radial to the shaft axis.

## SUMMARY OF THE INVENTION

According to the invention a labyrinth seal between two relatively rotating parts comprises passages which are bounded by frusto-conical walls of conic surfaces co-axial with the axis of rotation as well as passages radial to the axis of rotation.

In one form of the invention the seal is formed between members from which project intercalated annular projections formed with the truncated conic surfaces.

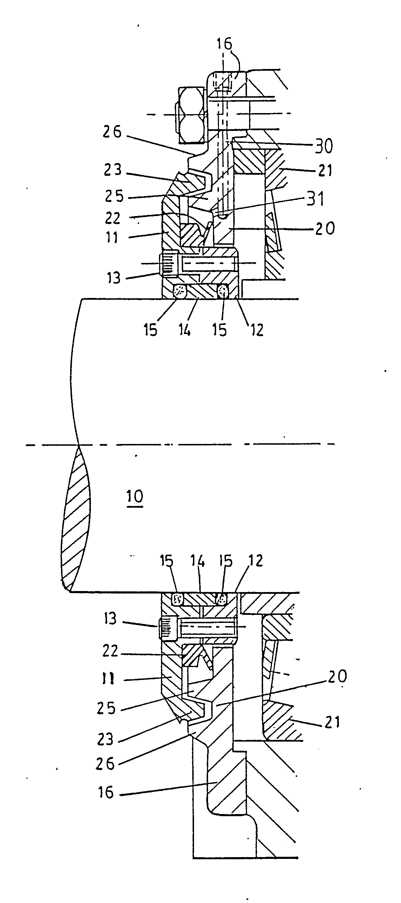

## DESCRIPTION OF THE DRAWING

It is a fragmentary section through a bearing housing and shaft assembly.

## DESCRIPTION OF AN EMBODIMENT

A shaft 10 carries a flinger plate for a bearing housing cover 16. The flinger plate is composed of a front section 11 and a rear section 12 which may be clamped together by means of set screws 13. Each of the sections has an annular groove adjacent the shaft 10 and the grooves together form an annular cavity around the shaft 10.

On the shaft 10 there is an annulus 14 which is a slide fit on it. On each side of the annulus there is an O-ring 15. The annulus 14 and the O-rings 15 fit into the annular cavity formed between the parts 11 and 12. In the clamped position as illustrated, the O-rings 15 are squeezed between the annulus and a section 11 or 12.

The result is that the flinger plate 11, 12 is accurately and securely positioned on the shaft 10 in a stable position without any wobbling. The ingress of dirt along the shaft 10 is also prevented.

Facing the flinger plate 11 is a side wall 20 of the bearing housing of a bearing 21.

Between the plate 11 and the wall 20 there is a conventional lip sealing ring 22 or any other suitable rubbing seal.

The plate 11 is formed with an annular flange 23 bounded by two conic surfaces. The flange 23 is straddled by two annular flanges 25 and 26 also bounded by conic surfaces. The conic surfaces are on frusto-cones co-axial with the shaft 10.

It will be seen that between the sealing ring 22 and the labyrinth outlet between the flanges 23 and 26 a labyrinth is formed which is composed of interconnected passages which all have a radial component. Particles which penetrate the seal thus tend to be moved to the outlet by centrifugal force. Also if liquid enters at the top, it runs through the labyrinth and out at the bottom.

As described above the shaft 10 rotates and the housing cover 16 is stationary. In another application to guide rollers for shaft conveyances, the shaft will be stationary while the guide roller, replacing the housing 16, will rotate.

Barrier grease pumped into a bore 30 passes through a hole 31 into the labyrinth space. The lip seal 22 prevents the grease from getting to the shaft 10, but the grease forces contaminants from the labyrinth.

**Claims**

1. A labyrinth seal between two relatively rotating parts comprising passages which are bounded by frusto-conical walls of conic surfaces co-axial with the axis of rotation as well as passages radial to the axis of rotation.

2. The seal claimed in claim 1 in which the seal is formed between members from which project intercalated annular projections formed with the truncated conic surfaces.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 274 049  (FISCHER) <br> * Page 2, lines 114-127;  figures 3,9 * | 1,2 | F 16 J  15/447 <br> F 16 C  33/80 |
| X | US-A-4 209 178  (MACKENZIE) <br> * Column 2, lines 7-27; figure * | 1,2 | |
| X | US-A-2 262 382  (BIEREND) <br> * Figure * | 1,2 | |
| X | US-A-1 820 150  (MOODY) <br> * Figure 4 * | 1,2 | |

TECHNICAL FIELDS SEARCHED (Int. Cl.4)

F 16 J
F 16 C

The present search report has been drawn up for all claims

| Place of search | Date of completion of the search | Examiner |
|---|---|---|
| THE HAGUE | 07-05-1987 | LEGER M.G.M. |